# EUROPEAN PATENT SPECIFICATION

(11) **EP 3 444 563 B1**
(45) Date of publication and mention of the grant of the patent: **29.01.2020**
(21) Application number: 18188516.1
(22) Date of filing: 10.08.2018
(51) Int. Cl.: G01B 21/20, G01M 13/00, G01B 5/00

(54) **SYSTEM AND METHOD FOR PISTON RING PROGNOSTIC**
SYSTEM UND VERFAHREN ZUR KOLBENRINGPROGNOSE
SYSTÈME ET PROCÉDÉ DE PRONOSTIC D'UN ANNEAU DE PISTON

(30) Priority: 18.08.2017 IN 201741029279
(43) Date of publication of application: 20.02.2019
(73) Proprietor: AI ALPINE US BIDCO INC., Wilmington, Delaware 19801 (US)
(72) Inventor: KATHAYANATT, Savio Sebastian, 560066 Bangalore, Karnataka (IN); ANANTHA RAO, Harsha Kikkari, 560066 Bangalore, Karnataka (IN); MATH, Souvik, 560066 Bangalore, Karnataka (IN); HOLANI, Praveen, 560066 Bangalore, Karnataka (IN); SRIDHAR, Mandyam Rangayan, 560080 Bangalore, Karnataka (IN)
(74) Representative: Torggler & Hofinger Patentanwälte

(56) References cited:
- WO-A1-2013/083108
- US-A- 4 987 774
- US-A- 5 258 930
- US-A1- 2006 131 520

## Description

### BACKGROUND

Embodiments of the present specification relate generally to prognostic of reciprocating machine components, and more particularly to systems and methods for inspection and prognostic of piston rings.

Piston rings are widely used in internal combustion (IC) engine cylinders, primarily for sealing purposes. Piston rings also perform other functions, such as, but not limited to, lubrication and heat transfer. Piston rings are made from special materials having capacity to withstand extreme operating conditions and are especially suitable for applications where high pressure, high temperature and high corrosive operating conditions are encountered. In automotive industry, performance evaluation of engine components, especially tribological performance of the piston ring and cylinder bore system, is central for achieving optimum engine efficiency and durability. Optimum condition of engine components, especially of piston rings, is required to manage power loss, fuel consumption, oil consumption, blow by, and harmful exhaust emissions.

A wear rate of a piston ring and a bore system is a significant parameter required to assess performance of an engine as wear results in poor performance, decreased oil economy and eventually requires an engine overhaul. Engine tests for evaluation of performance assessments are costly and time consuming. Mathematical models for various wear mechanisms are used for estimation of deterioration of piston ring performance.

The current operating life of a piston ring having a coating thickness of 200 microns is estimated at 30000 hours. Typically, about 50 microns of wear is observed during the current operating life of the piston. Presently, the piston ring is replaced in a scheduled maintenance after an estimated average life span of the piston ring. However, the estimated average life span is conservative and adds to overhead of maintenance.

Concerning prior art, US5,258,930 discloses the in-situ measurement of wear of piston rings by measuring reference grooves on the piston rings. An expected lifetime of the piston rings is estimated based on the wear. WO2013/083108 A1 discloses the optical measurement of a piston ring after manufacture and performs a comparison to a reference. US2006/131520 A1 discloses the optical measurement of a piston ring to ensure it is correctly fitted onto the piston. US4,987,774 discloses the mechanical measurement of the thickness of piston rings.

### BRIEF DESCRIPTION

The invention is defined in the appended independent claims.

In accordance with one aspect of the present invention, a method is disclosed. The method includes obtaining a reference profile of a piston ring. The reference profile comprises a plurality of reference fiducials. The method further includes receiving a measured profile of the piston ring. The measured profile comprises a plurality of measured fiducials. The method further includes aligning the measured profile with the reference profile based on one or more of the plurality of reference fiducials and one or more of the plurality of measured fiducials. The method also includes determining one or more wear parameters based on the aligned measured profile and the reference profile. The one or more wear parameters includes a wear depth value and a wear volume value. The method also includes generating a wear model based on the one or more wear parameters. The method also includes estimating a life of the piston ring based on the wear model.

In accordance with another aspect of the present invention, a system is disclosed. The system includes at least one processor unit and a memory unit communicatively coupled to a communications bus. The system further includes a data acquisition unit communicatively coupled to the communications bus and configured to obtain a reference profile of a piston ring. The reference profile includes a plurality of reference fiducials. The data acquisition unit is further configured to receive a measured profile of the piston ring. The measured profile includes a plurality of measured fiducials. The system also includes a profile registration unit communicatively coupled to the data acquisition unit and configured to align the measured profile with the reference profile based on one or more of the plurality of reference fiducials and one or more of the plurality of measured fiducials. The system further includes a model generator communicatively coupled to the profile registration unit and configured to determine one or more wear parameters based on the aligned measured profile and the reference profile. The one or more wear parameters comprises a wear depth value and a wear volume value. The model generator is further configured to generate a wear model based on the one or more wear parameters. The system also includes a life prediction unit communicatively coupled to the model generator and configured to estimate a life of the piston ring based on the wear model.

### DRAWINGS

These and other features and aspects of embodiments of the present invention will become better understood when the following detailed description is read with reference to the accompanying drawings in which like characters represent like parts throughout the drawings, wherein:
FIG. 1 is a diagrammatic illustration of a setup for determining prognostic of a piston ring in accordance with an exemplary embodiment;
FIG. 2 is a flow diagram illustrating a work flow in determining prognostic of the piston ring in accordance with an exemplary embodiment;
FIG. 3 is a cross sectional view of a piston ring illustrating a plurality of reference fiducials in accordance with an exemplary embodiment;
FIG. 4A is a graph illustrating a reference profile and a measured profile used in an exemplary embodiment;
FIG.4B is a graph illustrating the reference profile and the measured profile of FIG. 4A after profile registration in accordance with an exemplary embodiment;
FIG. 4C is a graph illustrating a region of the graph of FIG. 4B used for determining wear parameter in accordance with an exemplary embodiment;
FIG. 5 is a flow chart illustrating a maintenance work flow of a piston ring in accordance with an exemplary embodiment; and
FIG. 6 is a flow chart of a method of determining prognostic of a piston ring in accordance with an exemplary embodiment.

### DETAILED DESCRIPTION

Embodiments of systems and methods for determining prognostic of reciprocating machine components are described in detail hereinafter. More particularly, the systems and methods configured for determining prognostic of piston ring are disclosed in the subsequent paragraphs.

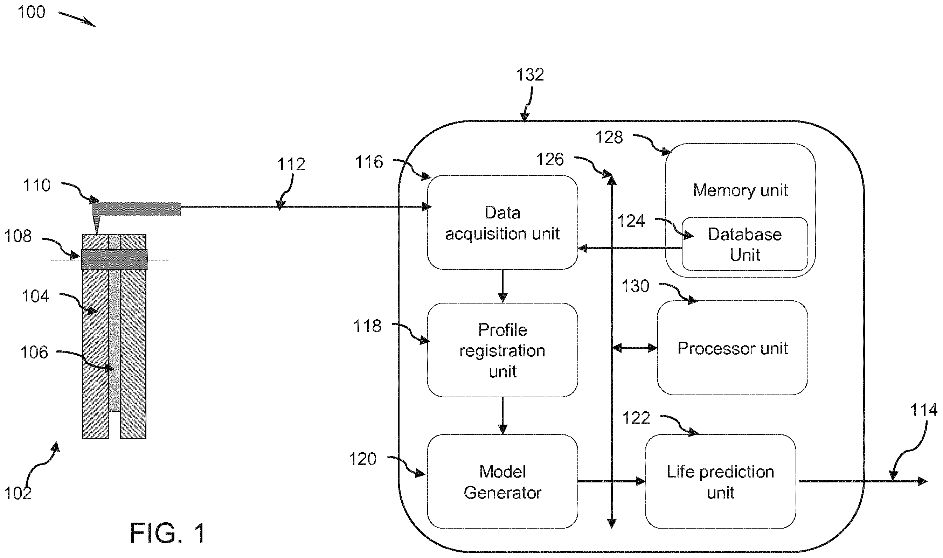

FIG. 1 is a diagrammatic illustration of a setup 100 for determining prognostic of a piston ring in accordance with an exemplary embodiment. The setup 100 includes a ring holder jig 102 having a pair of clamping plates 104 configured to hold a piston ring 106 between the clamping plates 104. A plurality of pins 108 is used to secure the piston ring 106 under a small tension. The plurality of pin locations is disposed on an inner circle of the piston ring 106. The setup 100 further includes a profilometer 110 coupled to the ring holder jig 102 and configured to acquire measurements 112 from the piston ring 106. In one embodiment, the profilometer 110 is a stylus type profilometer. In another embodiment, the profilometer 110 is an optical profilometer. It may be noted herein that the setup 100 is not limited to a ring holder jig 102 and may employ alternate equipment for acquiring measurements. In one embodiment, a camera based system may be used for acquiring measurements 112. In another embodiment, a different mechanical structure or a machine tool such as a lathe having ability to hold the piston ring 106 and enable locating scan line for repeat measurements may be used. The setup 100 further includes a prognostic system 132 communicatively coupled to the profilometer 110 and configured to determine a prognostic parameter 114, representative of health of the piston ring 106.

In one embodiment, the prognostic system 132 includes a data acquisition unit 116, a profile registration unit 118, a model generator 120, a life prediction unit 122, and a database unit 124. The plurality of units 116, 118, 120, 122, 124 is communicatively coupled to each other by a communications bus 126. The prognostic system 132 includes at least one processor unit 130 and a memory unit 128 communicatively coupled to a communications bus 126.

The data acquisition unit 116 is communicatively coupled to the communications bus 126 and configured to obtain a reference profile of the piston ring 106 from the memory unit 128. The reference profile includes a plurality of reference fiducials. In one embodiment, the plurality of reference fiducials includes a first forty-five degrees slope, a three-degrees slope, a second forty-five-degrees slope and an intersecting point of the three-degrees slope and the second forty-five-degrees slope. The data acquisition unit 116 is also communicatively coupled to the profilometer 110 and configured to receive the measurements 112. In one embodiment, the measurements 112 include a measured profile of the piston ring 106. The measured profile includes a plurality of measured fiducials corresponding to the plurality of reference fiducials.

In one embodiment, the data acquisition unit 116 is configured to obtain a first plurality of geometrical features of the piston ring from a computer aided design (CAD) model of the piston ring. The first plurality of geometrical features is representative of the reference fiducials of the reference profile. The data acquisition unit 116 is further configured to measure a second plurality of geometrical features of the piston ring using a co-ordinate measuring machine (CMM). The second plurality of geometrical features is representative of the measured fiducials of the reference profile. In an alternate embodiment, the data acquisition unit 116 is further configured to acquire a three-dimensional (3D) scan of the piston ring 106. In such an embodiment, the data acquisition unit is further configured to obtain a plurality of two-dimensional (2D) images at a plurality of cross-sections based on the 3D scan. The second plurality of geometrical features of the piston ring corresponding to the measured fiducials, is determined based on the plurality of 2D images. In one embodiment, a measurement system, such as but not limited to, the profilometer 110 and a camera based measurement system may acquire the measurements 112 and store them in the memory unit 128 which is accessed by the data acquisition unit 116 at a later time instant. Further, a CAD design may also be stored in the memory unit 128. In such an embodiment, the data acquisition unit 116 is configured to receive the first plurality of geometrical features and the second plurality of geometrical features from the memory unit 128. The first plurality of geometrical features and the second plurality of geometrical features are selected from a non-wearable region.

The profile registration unit 118 is communicatively coupled to the data acquisition unit 116 and configured to align the measured profile with the reference profile based on one or more of the plurality of reference fiducials and one or more of the plurality of measured fiducials. The profile registration unit 118 is further configured to register the measured profile with the reference profile based on the first plurality of geometrical features and the second plurality of geometrical features using a registration technique. The profile registration unit 118 is configured to transform the first plurality of geometrical features and generate a modified first plurality of geometrical features representative of a transformed reference profile aligned with the measured profile.

The model generator 120 is communicatively coupled to the profile registration unit 118 and configured to determine one or more wear parameters based on the measured profile and the transformed reference profile. In one embodiment, model generator 120 is configured to perform data analysis of the modified first plurality of geometrical features and the second plurality of geometrical features. Alternatively, in another embodiment, the model generator 120 is configured to perform data analysis of the first plurality of geometrical features and the modified second plurality of geometrical features.

In the embodiment where the modified first plurality of geometrical features is considered, the data analysis includes modelling the transformed reference profile and the measured profile by polynomial functions. Specifically, modified first plurality of geometrical features, representative of the aligned reference profile, is modelled by a first polynomial function. Further, the second plurality of geometrical features, representative of the measured profile, is modelled by a second polynomial function. Additional features between successive modified first plurality of geometrical features are computed by interpolating the first polynomial function. Similarly, additional features between successive second plurality of geometrical features are computed by interpolating the second polynomial function. The model generator 120 is further configured to compute a difference between the interpolated first polynomial and the interpolated second polynomial to determine one or more wear parameters. In one embodiment, the first polynomial and the second polynomial are cubic polynomials. In alternate embodiments, other types of mathematical functions may be used to model the first plurality of geometrical features and the second plurality of geometrical features. The one or more wear parameters includes a wear depth value, a wear volume value and a wear contact area value. The model generator 120 is further configured to generate a wear model based on the one or more wear parameters.

Further, the model generator 120 is configured to generate a machine learning model corresponding to one of the wear parameters. The machine learning model is determined using a machine learning technique. In one embodiment, the machine learning technique trains a machine learning model to learn progression of the wear parameter based on historical data acquired during previous maintenance schedules. The machine learning model is used for predicting the wear parameter at a future time instant.

The life prediction unit 122 is communicatively coupled to the model generator 120 and configured to estimate the prognostic parameter 114 of the piston ring based on the wear model. The prognostic parameter 114 is determined based on a predicted wear parameter estimate at a future time instant. In one embodiment, the prognostic parameter 114 is representative of an estimate of remaining useful life of the piston ring based on the wear model. In another embodiment, the life prediction unit 122 is further configured to estimate a future time instant at which the predicted wear parameter estimate exceeds a pre-determined wear limit value.

The database unit 124 is communicatively coupled to the other units 116, 118, 120, 122, 130, 128 via the communications bus 126 and configured to store the data in a structured way using a plurality of tables. In one embodiment, the database unit 124 is part of the memory unit 128 and may employ at least one of the relational database management system (RDBMS), a structured query language (SQL) database and a not only structured query language (NoSQL) database. The database unit 124 includes historical data corresponding a plurality of piston rings collected over an extended time period spanning entire life cycle of each of the plurality of piston rings. Specifically, the database unit 124 includes reference profile for each of the plurality of piston rings, a plurality of measured profiles for each of the plurality of piston rings, and remaining useful life estimates corresponding to each of the plurality of measured profiles. Each of the plurality of measured profiles are acquired during scheduled maintenance of the engine in which the corresponding piston ring is assembled.

Moreover, the processor unit 130 may include at least one of a general purpose processor, a controller, a digital signal processor or a customized processing element such as, but not limited to, an application specific integrated circuit (ASIC) and field programmable gate array (FPGA). The processor unit 130 may receive additional inputs from a user through a user interface 162 or any other input device such as a keyboard. The processor unit 130 may also be configured to provide one or more outputs to an output device such as a display 160. The processor unit 130 may also be configured to perform the functionality provided by the data acquisition unit 116, profile registration unit 118, the model generator 120, and the life prediction unit 122. The processor unit 130 is also configured to store data into and retrieve data from the memory unit 128 or the database 124.

In one embodiment, the memory unit 128 is a random access memory (RAM), read only memory (ROM), flash memory or any other type of computer readable memory medium accessible by at least one of the data acquisition unit 116, profile registration unit 118, the model generator 120 and the life prediction unit 122. Also, in certain embodiments, the computer readable memory medium may be encoded with a program to instruct the processor unit 130 to enable a sequence of steps to generate prognostic of piston rings.

In one embodiment, the memory unit 128 may include a non-transitory computer readable medium having instructions to enable at least one processor unit to obtain a reference profile of a piston ring. The reference profile includes a plurality of reference fiducials. Further, the instructions enable the at least one processor unit to receive a measured profile of the piston ring. The measured profile includes a plurality of measured fiducials. The instructions enable the at least one processor unit to align the measured profile with the reference profile based on one or more of the plurality of reference fiducials and one or more of the plurality measured fiducials. Further, the instructions enable the at least one processor unit to determine one or more wear parameters based on the aligned measured profile and the reference profile. The one or more wear parameters includes a wear depth value, a wear contact area value and/or a wear volume value. The instructions enable the processor unit 130 to generate a wear model based on the one or more wear parameters. Also the instructions enable the at least one processor unit to predict a life of the piston ring based on the wear model.

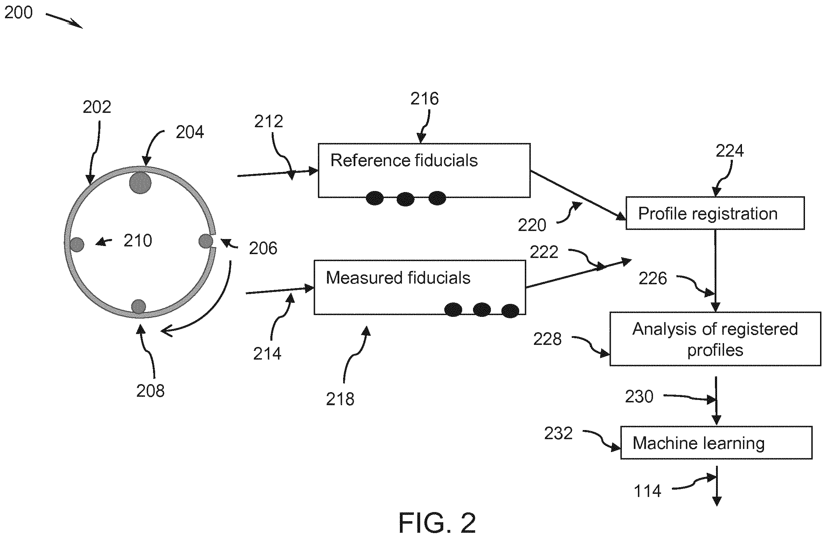

FIG. 2 is a flow diagram 200 illustrating work flow in determining prognostic of the piston ring in accordance with an exemplary embodiment. The piston ring 106 includes four guide posts 202, 204, 206, and 208 used for securing the piston ring 106. A discontinuity exists at the guidepost 206 of the piston ring 106. The guide posts 202, 204, 206, and 208 along with the discontinuity in the ring, helps relocate the ring at the same circumferential position during the second and subsequent measurements and facilitates easy indexing between the different measurement locations on each ring. The measurements are acquired at locations corresponding to the guideposts 204, 206 and 208. The measurements 112 include a first plurality of geometrical features 212, representative of reference fiducials 216 determining a reference profile 220. Further, the measurements 112 includes a second plurality of geometrical features 214, representative of measured fiducials 218 determining a measured profile 222. The reference profile 220 and the measured profile 222 are aligned using a registration technique 224 to generate a registered profile 226 corresponding to the measured profile 222 aligned with the reference profile 220. Specifically, the registered profile 226 includes a modified first plurality of geometrical features and the second plurality of geometrical features 214. In another embodiment, the registered profile 226 includes the first plurality of geometrical features and modified second plurality of geometrical features. The registered profile 226 is analyzed 228 to determine one or more wear parameters 230. Further, the one or more wear parameters 230 are modelled using a machine learning technique 232 to generate a wear parameter model. The wear parameter model is further used to determine the prognostic parameter 114.

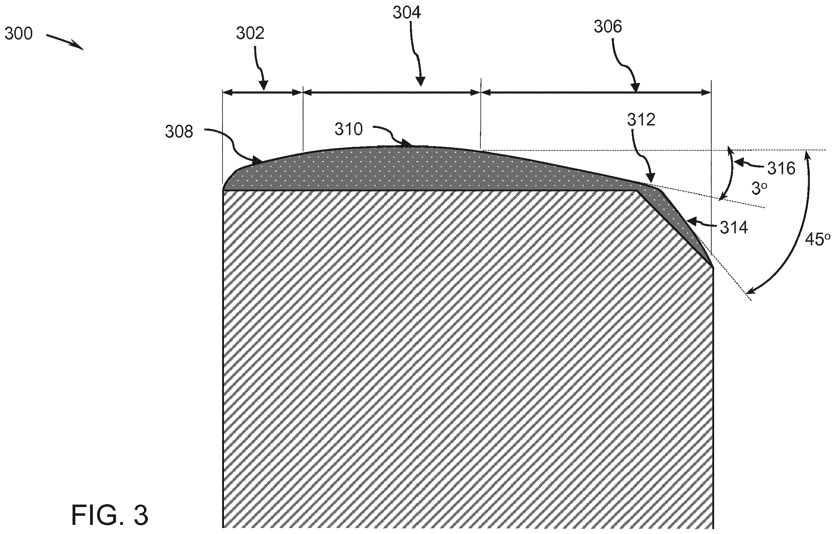

FIG. 3 is a cross sectional view 300 of a piston ring illustrating a plurality of reference fiducials in accordance with an exemplary embodiment. The cross section view 300 includes a plurality of example measurement values of a representative piston ring. Further, the cross section view 300 includes a first non-wearable region 302, a second non-wearable region 306 and a wearable region 304 in between the first non-wearable region 302 and the second non-wearable region 306. The first non-wearable region 302 is formed by a first forty-five degrees slope 308 and the second non-wearable region 306 is formed by a three-degrees slope 316 followed by a second forty-five degrees slope 314. The first forty-five degrees slope 308, the second forty-five degrees slope 314 and the three-degrees slope 316 are considered as fiducials among the plurality of fiducials of the reference profile 220 and the measured profile 222. An intersection point 312 intersecting the slopes 316 and 314 is one of the plurality of fiducials. The wearable region 310 is relatively flat region with a barrel shape exposed for wear due to friction with the inner wall of the cylinder.

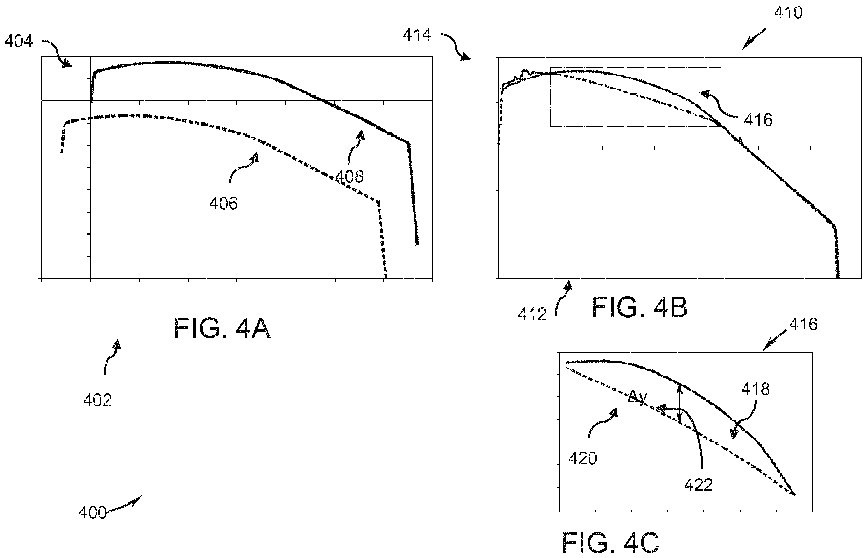

FIG. 4A is a graph 400 illustrating a reference profile and a transformed reference profile in accordance with an exemplary embodiment. The graph 400 includes an x-axis 402, representative of measurements along a first dimension with a first scaling and a y-axis 404, representative of measurements along a second dimension with a second scaling corresponding to a cross section of the piston ring. The graph 400 includes a first curve 406, representative of reference profile of a piston ring and a second curve 408, representative of transformed reference profile. FIG.4B is a graph 414 illustrating the transformed reference profile 408. and the measured profile 408a after profile registration. The graph 414 includes an x-axis 402, representative of measurements along the first dimension and a y-axis 404, representative of measurements along the second dimension corresponding to the cross section of the piston ring. The graph 414 includes a region 416 where the reference profile is not coincident with the measured profile indicating wear condition. FIG. 4C is a graph illustrating the region 416 of the graph of FIG. 4B used for determining wear parameter in accordance with an exemplary embodiment. FIG. 4C illustrates the region 416 with a first curve 418 representing the transformed reference profile and a second curve 420, representative of measured profile having observable wear effects. A wear depth value 422 is determined based on the first curve 418 and the second curve 420 as a maximum distance between them. In one embodiment, a wear contact area and a wear volume may be determined based on the wear depth and the plurality of measurement values (such as shown in FIG. 3) representative of dimensions of the piston ring.

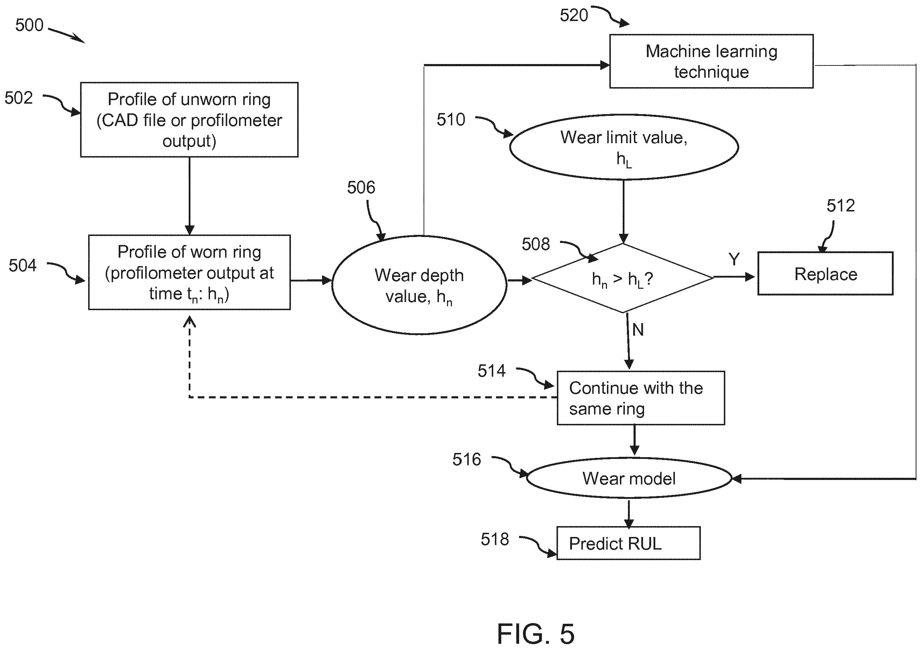

FIG. 5 is flow chart 500 illustrating maintenance work flow of a piston ring in accordance with an exemplary embodiment. In the illustrated embodiment, the maintenance work flow requires a reference profile of unworn piston ring. In one embodiment, the reference profile is obtained from design or from measurements as illustrated in step 502. In one embodiment, the reference profile is obtained from a computer aided design (CAD) file. In another embodiment, the reference profile is obtained from measurements performed at the time of assembly of the piston ring into the engine. For a particular piston ring, the same reference profile is used during every maintenance schedule throughout the life of that piston ring. Further, during the maintenance schedule, a measured profile of the piston ring is received from measurements as illustrated in step 504. In step 506, a wear depth value is determined based on the reference profile and the measured profile of the piston ring. In general, any other wear parameter, such as, but not limited to, a wear contact area and a wear volume may be determined at step 506 and the maintenance workflow is not limited to wear depth alone.

In step 508, the wear depth value is compared with a wear limit value obtained at step 510. In one embodiment, the wear limit value is specified by the user. In other embodiment, the wear limit value is obtained from a memory location. In this embodiment, the wear limit value 510 is representative of a maximum allowable wear depth value beyond which the piston ring is to be replaced. If the wear depth value determined at step 506 is greater than the wear limit value obtained at step 510, the piston ring is replaced at step 512. If the wear depth value determined at step 506 is not greater than the wear limit value obtained from step 510, the piston ring is not replaced and the maintenance work flow is completed. Further, a wear model is generated in step 516 based on the wear depth value determined at step 506. Although the wear model may be a mathematical or a physical model, in one embodiment, a machine learning technique is used in step 520 to generate the wear model of step 516. The machine learning technique is based on historical data that includes one or more wear parameters and life parameters corresponding to the one or more wear parameters. The historical data is recorded over an extended period of time spanning life period of a plurality of piston rings having same or similar specifications as that of the piston ring in current use.

In step 518, the wear model is used to generate an estimate of remaining useful life of the piston ring. The estimate of the remaining useful life is used by personnel who are managing the work flow to ensure that the piston ring is usable till next scheduled maintenance inspection.

The maintenance work flow disclosed by the flow chart 500 is explained with help of a use case for a piston ring with an average life duration of thirty thousand hours as specified by the piston manufacturer. After using the piston ring for about twenty-five thousand hours, and before completion of thirty thousand hours, wear of the piston ring coating is measured while performing maintenance procedures. For acquiring piston ring measurements, cylinder of the engine is to be opened and the piston ring may have to be disassembled. Further, an estimate of remaining useful life duration of the piston ring is estimated as seventeen thousand hours at step 518. The piston ring is continued to be used after twenty five thousand hours for the next seventeen thousand hours without replacement. The cylinder is not opened during subsequent scheduled maintenance, and advantageously, the piston ring is used for additional twelve thousand hours beyond average life duration of thirty thousand hours as specified by the manufacturer.

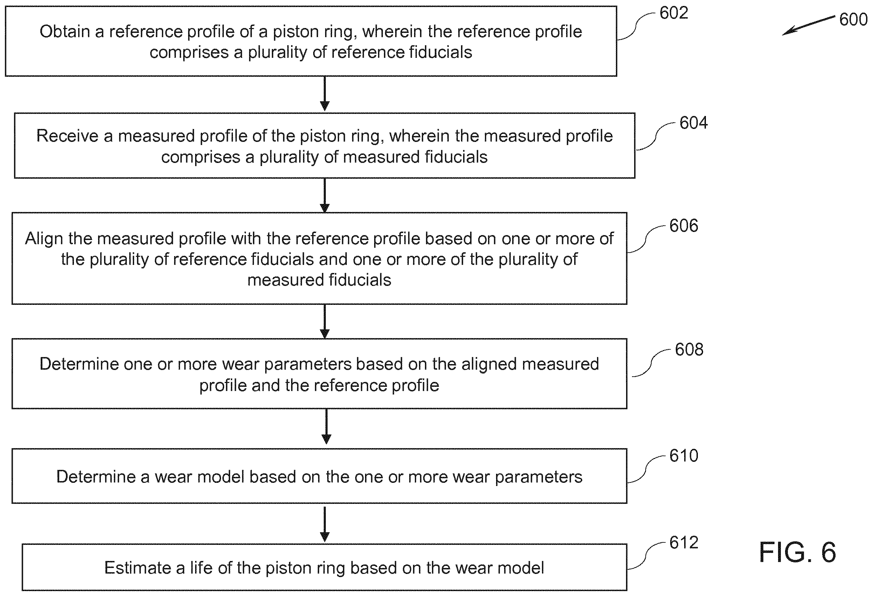

FIG. 6 is a flow chart 600 of a method of determining prognostic of a piston ring in accordance with an exemplary embodiment. The method includes obtaining a reference profile of a piston ring at step 602. The reference profile includes a plurality of reference fiducials. In one embodiment, the plurality of reference fiducials includes one or more of a first forty-five degrees slope, a three-degrees slope, a second forty-five-degrees slope, and an intersecting point of the three-degrees slope and the second forty-five-degrees slope. In one embodiment, obtaining the reference profile includes obtaining a first plurality of geometrical features of the piston ring from a computer aided design (CAD) model of the piston ring.

The method further includes receiving a measured profile of the piston ring in step 604. The measured profile includes a plurality of measured fiducials. It may be noted that one or more of the plurality of measured fiducials corresponds to one or more of the reference fiducials. The receiving of the measured profile includes measuring a second plurality of geometrical features of the piston ring using a co-ordinate measuring machine (CMM).

In another embodiment, the step 604 of receiving the measured profile includes acquiring a three-dimensional (3D) scan of the piston ring. Further, a plurality of two-dimensional (2D) images at a plurality of cross-sections of the piston ring is obtained based on the 3D scan of the piston ring. The step 604 further includes determining the second plurality of geometrical features of the piston ring based on the plurality of 2D images.

The method further includes, in step 606, aligning the measured profile with the reference profile based on one or more of the plurality of reference fiducials and one or more of the plurality of measured fiducials. In one embodiment, aligning the measured profile includes registering the measured profile with the reference profile based on the plurality of reference fiducials and the plurality of measured fiducials.

Further, at step 608, the method also includes determining one or more wear parameters based on the aligned measured profile and the reference profile. The one or more wear parameters includes at least one of a wear depth value, a wear contact area value and a wear volume value. In one embodiment, determining the one or more wear parameters includes interpolating the first plurality of geometrical features by a first polynomial and the second plurality of geometrical features using a second polynomial. Further, the step of determining includes computing a difference between the first polynomial and the second polynomial to determine one or more of the wear parameter.

Further, the method further includes determining a wear model based on the one or more wear parameters as illustrated in step 610. In another embodiment, the step 610 of determining the wear model includes generating a machine learning model for predicting the wear parameter at a future time instant. The machine learning model is determined using a machine learning technique using historical data corresponding to a plurality of piston rings acquired during their entire life span.

In step 612, the method also includes estimating a life of the piston ring based on the wear model. In another embodiment, estimating the life of the piston ring includes estimating a future time instant at which the predicted wear parameter exceeds a pre-determined wear limit value.

Disclosed embodiments measure wear in a plurality of locations of a piston ring and thereby enable accurate estimation of a residual life period of the piston ring. Measuring wear in the piston ring using the present technique is more accurate compared to measuring cylinder bore wear or end gap measurements using conventional techniques. Advantageously, the present technique is able to extend the life of piston rings from an average of thirty thousand operating hours to about forty-five thousand operating hours. Further, the disclosed technique is able to provide prognosis that helps to decide whether it is required to remove/replace the piston ring to avoid imminent road failure. Although the disclosed embodiments are directed towards piston rings of internal combustion (IC) engines, the present technique is not limiting and may be applied to assess life of components exposed to wearing in other industrial applications, although presently not claimed as such.

It is to be understood that not necessarily all such objects or advantages described above may be achieved in accordance with any particular embodiment. Thus, for example, those skilled in the art will recognize that the systems and techniques described herein may be embodied or carried out in a manner that achieves or improves one advantage or group of advantages as taught herein without necessarily achieving other objects or advantages as may be taught or suggested herein.

While the technology has been described in detail in connection with only a limited number of embodiments, it should be readily understood that the specification is not limited to such disclosed embodiments. Rather, the technology can be modified to incorporate any number of variations, alterations, substitutions or equivalent arrangements not heretofore described, but which are commensurate with the scope of the claims. Additionally, while various embodiments of the technology have been described, it is to be understood that aspects of the specification may include only some of the described embodiments. Accordingly, the specification is not to be seen as limited by the foregoing description, but is only limited by the scope of the appended claims.

## Claims

1. A method (600), comprising:
obtaining (602) a reference profile (220) of a piston ring (106), wherein the reference profile (220) comprises a plurality of reference fiducials (216);
receiving (604) a measured profile (222) of the piston ring (106), wherein the measured profile (222) comprises a plurality of measured fiducials (218);
aligning (606) the measured profile (222) with the reference profile (220) based on one or more of the plurality of reference fiducials (216) and one or more of the plurality of measured fiducials (218);
determining (608) one or more wear parameters (230) based on the aligned measured profile (222) and the reference profile (220), wherein the one or more wear parameters (230) comprises a wear depth value and a wear volume value;
generating (610) a wear model based on the one or more wear parameters (230); and
estimating (612) a life of the piston ring (106) based on the wear model.

2. The method (600) of claim 1, wherein receiving (604) the reference profile (220) comprises obtaining (602) a first plurality of geometrical features (212) of the piston ring (106) from a computer aided design (CAD) model of the piston ring (106), wherein the first plurality of geometrical features (212) is representative of the plurality of reference fiducials (216).

3. The method (600) of claim 2, wherein receiving (604) the measured profile (222) comprises measuring a second plurality of geometrical features (214) of the piston ring (106) using a co-ordinate measuring machine (CMM), wherein the second plurality of geometrical features (214) is representative of the plurality of measured fiducials (218).

4. The method (600) of claim 3, wherein receiving (604) the measured profile (222) comprises:
acquiring a three-dimensional (3D) scan of the piston ring (106);
obtaining (602) a plurality of two-dimensional (2D) images at a plurality of cross-sections based on the 3D scan; and
determining (608) a second plurality of geometrical features (214) of the piston ring (106) based on the plurality of 2D images.

5. The method (600) of claim 4, wherein aligning (606) the measured profile (222) comprises registering the measured profile (222) with the reference profile (220) based on the first plurality of geometrical features (212), and the second plurality of geometrical features (214).

6. The method (600) of claim 3, wherein determining (608) the one or more wear parameters (230) comprises:
interpolating the first plurality of geometrical features (212) by a first polynomial and the second plurality of geometrical features (214) using a second polynomial; and
computing a difference between the first polynomial and the second polynomial to determine the one or more wear parameter.

7. The method (600) of any preceding claim, wherein generating (610) the wear model comprises generating (610) a machine learning model for predicting a wear parameter estimate at a future time instant.

8. The method (600) of any preceding claim wherein estimating (612) the life of the piston ring (106) comprises estimating (612) a future time instant at which the predicted wear parameter estimate exceeds a pre-determined wear limit value.

9. The method (600) of any preceding claim, wherein the plurality of reference fiducials (216) comprises a first forty-five degrees slope (308), a second forty-five degrees slope (314), a three-degrees slope (316) and an intersecting point of the three-degrees slope (316) and the second forty-five degrees slope (314).

10. A system, comprising:
at least one processor unit (130) and a memory unit (128) communicatively coupled to a communications bus (126);
a data acquisition unit (116) communicatively coupled to the communications bus (126) and configured to:
obtain a reference profile (220) of a piston ring (106), wherein the reference profile (220) comprises a plurality of reference fiducials (216);
receive a measured profile (222) of the piston ring (106), wherein the measured profile (222) comprises a plurality of measured fiducials (218);
a profile registration unit (118) communicatively coupled to the data acquisition unit (116) and configured to align the measured profile (222) with the reference profile (220) based on one or more of the plurality of reference fiducials (216) and one or more of the plurality of measured fiducials (218);
a model generator (120) communicatively coupled to the profile registration unit (118) and configured to:
determine one or more wear parameters (230) based on the aligned measured profile (222) and the reference profile (220), wherein the one or more wear parameters (230) comprises a wear depth value and a wear volume value;
generate a wear model based on the one or more wear parameters (230); and
a life prediction unit (122) communicatively coupled to the model generator (120) and configured to estimate a life of the piston ring (106) based on the wear model.

11. The system of claim 10, wherein the data acquisition unit (116) is further configured to obtain a first plurality of geometrical features (212) of the piston ring (106) from a computer aided design (CAD) model of the piston ring (106), wherein the first plurality of geometrical features (212) is representative of the plurality of reference fiducials (216).

12. The system of claim 11, wherein the data acquisition unit (116) is further configured to measure a second plurality of geometrical features (214) of the piston ring (106) using a co-ordinate measuring machine (CMM), wherein the second plurality of geometrical features (214) is representative of the plurality of measured fiducials (218).

13. The system of claim 12, wherein the data acquisition unit (116) is further configured to:
acquire a three-dimensional (3D) scan of the piston ring (106);
obtain a plurality of two-dimensional (2D) images at a plurality of cross-sections based on the 3D scan; and
determine the second plurality of geometrical features (214) of the piston ring (106) based on the plurality of 2D images.

14. The system of claim 13, wherein the profile registration unit (118) is further configured to register the measured profile (222) with the reference profile (220) based on the first plurality of geometrical features (212), and the second plurality of geometrical features (214) using a registration technique (224).

15. The system of claim 14, wherein the model generator (120) is further configured to:
interpolate the first plurality of geometrical features (212) by a first polynomial and the second plurality of geometrical features (214) using a second polynomial; and
compute a difference between the first polynomial and the second polynomial to determine the one or more wear parameter.
a second forty-five-degrees slope (314), a three-degrees slope (316) and an intersecting point of the three-degrees slope (316) and the second forty-five-degrees slope (308).

## Patentansprüche

1. Verfahren (600), das Folgendes umfasst:
Erhalten (602) eines Bezugsprofils (220) eines Kolbenrings (106), wobei das Bezugsprofil (220) mehrere Bezugspunkte (216) umfasst;
Empfangen (604) eines gemessenen Profils (222) des Kolbenrings (106), wobei das gemessene Profil (222) mehrere gemessene Bezugspunkte (218) umfasst;
Anpassen (606) des gemessenen Profils (222) auf das Bezugsprofil (220) auf der Basis eines oder mehrerer der mehreren Bezugspunkte (216) und eines oder mehrerer der mehreren gemessenen Bezugspunkte (218);
Bestimmen (608) eines oder mehrerer Verschleißparameter (230) auf der Basis des angepassten gemessenen Profils (222) und des Bezugsprofils (220), wobei der eine oder die mehreren Verschleißparameter (230) einen Verschleißtiefenwert und einen Verschleißvolumenwert umfassen;
Generieren (610) eines Verschleißmodells auf der Basis des einen oder der mehreren Verschleißparameter (230); und
Schätzen (612) einer Lebensdauer des Kolbenrings (106) auf der Basis des Verschleißmodells.

2. Verfahren (600) nach Anspruch 1, wobei das Empfangen (604) des Bezugsprofils (220) das Erhalten (602) einer ersten Mehrzahl geometrischer Merkmale (212) des Kolbenrings (106) aus einem Computer Aided Design (CAD)-Modell des Kolbenrings (106) umfasst, wobei die erste Mehrzahl geometrischer Merkmale (212) für die mehreren Bezugspunkte (216) repräsentativ ist.

3. Verfahren (600) nach Anspruch 2, wobei das Empfangen (604) des gemessenen Profils (222) das Messen einer zweiten Mehrzahl geometrischer Merkmale (214) des Kolbenrings (106) unter Verwendung eines Koordinatenmessgerätes (CMM) umfasst, wobei die zweite Mehrzahl geometrischer Merkmale (214) für die mehreren gemessenen Bezugspunkte (218) repräsentativ ist.

4. Verfahren (600) nach Anspruch 3, wobei das Empfangen (604) des gemessenen Profils (222) umfasst:
Erfassen einer dreidimensionalen (3D-) Abtastung des Kolbenrings (106);
Erhalten (602) mehrerer zweidimensionaler (2D-) Bilder an mehreren Querschnitten auf der Basis des 3D-Scans; und
Bestimmen (608) einer zweiten Mehrzahl geometrischer Merkmale (214) des Kolbenrings (106) auf der Basis der mehreren 2D-Bilder.

5. Verfahren (600) nach Anspruch 4, wobei das Ausrichten (606) des gemessenen Profils (222) umfasst, das gemessene Profil (222) auf der Basis der ersten Mehrzahl geometrischer Merkmale (212) und der zweiten Mehrzahl geometrischer Merkmale (214) mit dem Bezugsprofil (220) in Übereinstimmung zu bringen.

6. Verfahren (600) nach Anspruch 3, wobei das Bestimmen (608) des einen oder der mehreren Verschleißparameter (230) umfasst:
Interpolieren der ersten Mehrzahl geometrischer Merkmale (212) durch ein erstes Polynom und der zweiten Mehrzahl geometrischer Merkmale (214) unter Verwendung eines zweiten Polynoms; und
Berechnen einer Differenz zwischen dem ersten Polynom und dem zweiten Polynom, um den einen oder die mehreren Verschleißparameter zu bestimmen.

7. Verfahren (600) nach einem der vorangehenden Ansprüche, wobei das Generieren (610) des Verschleißmodells das Generieren (610) eines Maschinenlernmodells zum Vorhersagen einer Verschleißparameterschätzung für einen zukünftigen Zeitpunkt umfasst.

8. Verfahren (600) nach einem der vorangehenden Ansprüche, wobei das Schätzen (612) der Lebensdauer des Kolbenrings (106) das Schätzen (612) eines zukünftigen Zeitpunktes umfasst, an dem die vorhergesagte Verschleißparameterschätzung einen zuvor festgelegten Verschleißgrenzwert überschreitet.

9. Verfahren (600) nach einem der vorangehenden Ansprüche, wobei die mehreren Bezugspunkte (216) eine erste fünfundvierzig-Grad-Schräge (308), eine zweite fünfundvierzig-Grad-Schräge (314), eine drei-Grad-Schräge (316) und einen Schnittpunkt der drei-Grad-Schräge (316) und der zweiten fünfundvierzig-Grad-Schräge (314) umfasst.

10. System, das Folgendes umfasst:
mindestens eine Prozessoreinheit (130) und eine Speichereinheit (128), die kommunikativ mit einem Kommunikationsbus (126) gekoppelt sind;
eine Datenerfassungseinheit (116), die kommunikativ mit dem Kommunikationsbus (126) gekoppelt und dazu konfiguriert ist, Folgendes auszuführen:
Erhalten eines Bezugsprofils (220) eines Kolbenrings (106), wobei das Bezugsprofil (220) mehrere Bezugspunkte (216) umfasst;
Empfangen eines gemessenen Profils (222) des Kolbenrings (106), wobei das gemessene Profil (222) mehrere gemessene Bezugspunkte (218) umfasst;
eine Profilausrichtungseinheit (118), die kommunikativ mit der Datenerfassungseinheit (116) gekoppelt und dafür konfiguriert ist, das gemessene Profil (222) auf der Basis eines oder mehrerer der mehreren Bezugspunkte (216) und eines oder mehrerer der mehreren gemessenen Bezugspunkte (218) auf das Bezugsprofil (220) anzupassen;
einen Modellgenerator (120), der kommunikativ mit der Profilausrichtungseinheit (118) gekoppelt und für Folgendes konfiguriert ist:
Bestimmen eines oder mehrerer Verschleißparameter (230) auf der Basis des angepassten gemessenen Profils (222) und des Bezugsprofils (220), wobei der eine oder die mehreren Verschleißparameter (230) einen Verschleißtiefenwert und einen Verschleißvolumenwert umfassen;
Generieren eines Verschleißmodells auf der Basis des einen oder der mehreren Verschleißparameter (230); und
eine Lebensdauervorhersageeinheit (122), die kommunikativ mit dem Modellgenerator (120) gekoppelt und dafür konfiguriert ist, eine Lebensdauer des Kolbenrings (106) auf der Basis des Verschleißmodells zu schätzen.

11. System nach Anspruch 10, wobei die Datenerfassungseinheit (116) des Weiteren dafür konfiguriert ist, eine erste Mehrzahl geometrischer Merkmale (212) des Kolbenrings (106) aus einem Computer Aided Design (CAD)-Modell des Kolbenrings (106) zu erhalten, wobei die erste Mehrzahl geometrischer Merkmale (212) für die mehreren Bezugspunkte (216) repräsentativ ist.

12. System nach Anspruch 11, wobei die Datenerfassungseinheit (116) des Weiteren dafür konfiguriert ist, eine zweite Mehrzahl geometrischer Merkmale (214) des Kolbenrings (106) unter Verwendung eines Koordinatenmessgerätes (CMM) zu messen, wobei die zweite Mehrzahl geometrischer Merkmale (214) für die mehreren gemessenen Bezugspunkte (218) repräsentativ ist.

13. System nach Anspruch 12, wobei die Datenerfassungseinheit (116) des Weiteren für Folgendes konfiguriert ist:
Erfassen einer dreidimensionalen (3D-) Abtastung des Kolbenrings (106);
Erhalten mehrerer zweidimensionaler (2D-) Bilder an mehreren Querschnitten auf der Basis des 3D-Scans; und
Bestimmen der zweiten Mehrzahl geometrischer Merkmale (214) des Kolbenrings (106) auf der Basis der mehreren 2D-Bilder.

14. System nach Anspruch 13, wobei die Profilausrichtungseinheit (118) des Weiteren dafür konfiguriert ist, das gemessene Profil (222) auf der Basis der ersten Mehrzahl geometrischer Merkmale (212) und der zweiten Mehrzahl geometrischer Merkmale (214) unter Verwendung einer Ausrichtungstechnik (224) mit dem Bezugsprofil (220) in Übereinstimmung zu bringen.

15. System nach Anspruch 14, wobei der Modellgenerator (120) des Weiteren für Folgendes konfiguriert ist:
Interpolieren der ersten Mehrzahl geometrischer Merkmale (212) durch ein erstes Polynom und der zweiten Mehrzahl geometrischer Merkmale (214) unter Verwendung eines zweiten Polynoms; und
Berechnen einer Differenz zwischen dem ersten Polynom und dem zweiten Polynom, um den einen oder die mehreren Verschleißparameter zu bestimmen;
eine zweite fünfundvierzig-Grad-Schräge (314), eine drei-Grad-Schräge (316) und einen Schnittpunkt der drei-Grad-Schräge (316) und der zweiten fünfundvierzig-Grad-Schräge (308).

## Revendications

1. Procédé (600), comprenant :
l'obtention (602) d'un profil de référence (220) d'un segment de piston (106), dans lequel le profil de référence (220) comprend une pluralité de repères de référence (216);
la réception (604) d'un profil mesuré (222) du segment de piston (106), dans lequel le profil mesuré (222) comprend une pluralité de repères mesurés (218);
l'alignement (606) du profil mesuré (222) avec le profil de référence (220) sur la base d'un ou plusieurs de la pluralité de repères de référence (216) et d'un ou plusieurs de la pluralité de repères mesurés (218);
la détermination (608) d'un ou plusieurs paramètres d'usure (230) sur la base du profil mesuré (222) et du profil de référence (220) alignés, dans lequel les un ou plusieurs paramètres d'usure (230) comprennent une valeur de profondeur d'usure et une valeur de volume d'usure;
la génération (610) d'un modèle d'usure sur la base des un ou plusieurs paramètres d'usure (230); et
l'estimation (612) d'une durée de vie du segment de piston (106) sur la base du modèle d'usure.

2. Procédé (600) selon la revendication 1, dans lequel la réception (604) du profil de référence (220) comprend l'obtention (602) d'une première pluralité de caractéristiques géométriques (212) du segment de piston (106) à partir d'un modèle de conception assistée par ordinateur (CAO) du segment de piston (106), dans lequel la première pluralité de caractéristiques géométriques (212) est représentative de la pluralité de repères de référence (216).

3. Procédé (600) selon la revendication 2, dans lequel la réception (604) du profil mesuré (222) comprend la mesure d'une deuxième pluralité de caractéristiques géométriques (214) du segment de piston (106) en utilisant une machine de mesure de coordonnées (CMM), dans lequel la deuxième pluralité de caractéristiques géométriques (214) est représentative de la pluralité de repères mesurés (218).

4. Procédé (600) selon la revendication 3, dans lequel la réception (604) du profil mesuré (222) comprend:
l'acquisition d'un balayage tridimensionnel (3D) du segment de piston (106);
l'obtention (602) d'une pluralité d'images bidimensionnelles (2D) à une pluralité de coupes transversales sur la base du balayage 3D; et
la détermination (608) d'une deuxième pluralité de caractéristiques géométriques (214) du segment de piston (106) sur la base de la pluralité d'images 2D.

5. Procédé (600) selon la revendication 4, dans lequel l'alignement (606) du profil mesuré (222) comprend l'opération consistant à faire coïncider le profil mesuré (222) avec le profil de référence (220) sur la base de la première pluralité de caractéristiques géométriques (212), et de la deuxième pluralité de caractéristiques géométriques (214).

6. Procédé (600) selon la revendication 3, dans lequel la détermination (608) des un ou plusieurs paramètres d'usure (230) comprend:
l'interpolation de la première pluralité de caractéristiques géométriques (212) par un premier polynôme et de la deuxième pluralité de caractéristiques géométriques (214) en utilisant un deuxième polynôme; et
le calcul d'une différence entre le premier polynôme et le deuxième polynôme pour déterminer les un ou plusieurs paramètres d'usure.

7. Procédé (600) selon l'une quelconque des revendications précédentes, dans lequel la génération (610) du modèle d'usure comprend la génération (610) d'un modèle d'apprentissage machine pour prédire une estimation de paramètre d'usure à un instant futur.

8. Procédé (600) selon l'une quelconque des revendications précédentes, dans lequel l'estimation (612) de la durée de vie du segment de piston (106) comprend l'estimation (612) d'un instant futur auquel l'estimation de paramètre d'usure prédite dépasse une valeur de limite d'usure prédéterminée.

9. Procédé (600) selon l'une quelconque des revendications précédentes, dans lequel la pluralité de repères de référence (216) comprend une première pente à quarante-cinq degrés (308), une deuxième pente à quarante-cinq degrés (314), une pente à trois degrés (316) et un point d'intersection de la pente à trois degrés (316) et de la pente à quarante-cinq degrés (314).

10. Système, comprenant :
au moins une unité de processeur (130) et une unité de mémoire (128) couplées, de manière à pouvoir communiquer, à un bus de communication (126) ;
une unité d'acquisition de données (116) couplée, de manière à pouvoir communiquer, au bus de communication (126) et configurée pour :
l'obtention d'un profil de référence (220) d'un segment de piston (106), dans lequel le profil de référence (220) comprend une pluralité de repères de référence (216) ;
la réception d'un profil mesuré (222) du segment de piston (106), dans lequel le profil mesuré (222) comprend une pluralité de repères mesurés (218) ;
une unité de coïncidence de profil (118) couplée, de manière à pouvoir communiquer, à l'unité d'acquisition de données (116) et configurée pour l'alignement du profil mesuré (222) avec le profil de référence (220) sur la base d'un ou plusieurs de la pluralité de repères de référence (216) et d'un ou plusieurs de la pluralité de repères mesurés (218) ;
un générateur de modèle (120) couplé, de manière à pouvoir communiquer, à l'unité de coïncidence de profil (118) et configuré pour :
la détermination d'un ou plusieurs paramètres d'usure (230) sur la base du profil mesuré (222) et du profil de référence (220) alignés, dans lequel les un ou plusieurs paramètres d'usure (230) comprennent une valeur de profondeur d'usure et une valeur de volume d'usure ;
la génération d'un modèle d'usure sur la base des un ou plusieurs paramètres d'usure (230) ; et
une unité de prédiction de durée de vie (122) couplée, de manière à pouvoir communiquer, au générateur de modèle (120) et configurée pour l'estimation d'une durée de vie du segment de piston (106) sur la base du modèle d'usure.

11. Système selon la revendication 10, dans lequel l'unité d'acquisition de données (116) est en outre configurée pour l'obtention d'une première pluralité de caractéristiques géométriques (212) du segment de piston (106) à partir d'un modèle de conception assistée par ordinateur (CAO) du segment de piston (106), dans lequel la première pluralité de caractéristiques géométriques (212) est représentative de la pluralité de repères de référence (216).

12. Système selon la revendication 11, dans lequel l'unité d'acquisition de données (116) est en outre configurée pour la mesure d'une deuxième pluralité de caractéristiques géométriques (214) du segment de piston (106) en utilisant une machine de mesure de coordonnées (CMM), dans lequel la deuxième pluralité de caractéristiques géométriques (214) est représentative de la pluralité de repères mesurés (218).

13. Système selon la revendication 12, dans lequel l'unité d'acquisition de données (116) est en outre configurée pour :
l'acquisition d'un balayage tridimensionnel (3D) du segment de piston (106) ;
l'obtention d'une pluralité d'images bidimensionnelles (2D) à une pluralité de coupes transversales sur la base du balayage 3D ; et
la détermination de la deuxième pluralité de caractéristiques géométriques (214) du segment de piston (106) sur la base de la pluralité d'images 2D.

14. Système selon la revendication 13, dans lequel l'unité de coïncidence de profil (118) est en outre configurée pour faire coïncider le profil mesuré (222) avec le profil de référence (220) sur la base de la première pluralité de caractéristiques géométriques (212), et de la deuxième pluralité de caractéristiques géométriques (214) en utilisant une technique de coïncidence (224).

15. Système selon la revendication 14, dans lequel le générateur de modèle (120) est en outre configuré pour :
l'interpolation de la première pluralité de caractéristiques géométriques (212) par un premier polynôme et de la deuxième pluralité de caractéristiques géométriques (214) en utilisant un deuxième polynôme ; et
le calcul d'une différence entre le premier polynôme et le deuxième polynôme pour déterminer les un ou plusieurs paramètres d'usure.
une deuxième pente à quarante-cinq degrés (314), une pente à trois degrés (316) et un point d'intersection de la pente à trois degrés (316) et de la pente à quarante-cinq degrés (308).
